# EUROPEAN PATENT SPECIFICATION

(11) **EP 2 196 772 B1**
(45) Date of publication and mention of the grant of the patent: **02.12.2015**
(21) Application number: 08171651.6
(22) Date of filing: 15.12.2008
(51) Int. Cl.: G01C 21/26

(54) **Pre-loading waypoint data**
Vorabladen von Wegpunktdaten
Pré-chargement de données de point de cheminement

(43) Date of publication of application: 16.06.2010
(73) Proprietor: BlackBerry Limited, Waterloo, ON N2K 0A7 (CA)
(72) Inventor: Crowley, Michael J, Irving, TX 75039 (US)
(74) Representative: Finnie, Peter John

(56) References cited:
- EP-A- 1 251 335
- EP-A- 1 530 025
- EP-A- 1 549 096
- EP-A- 1 909 066
- US-A1- 2003 060 973
- US-A1- 2006 080 032

## Description

The present disclosure relates generally to wireless communications devices and, in particular, to techniques for downloading and displaying maps on wireless communications devices.

Wireless communications devices such as the BlackBerry® by Research In Motion Limited provide a variety of useful functions, such as voice communication, e-mail and Web browsing. Of growing popularity are mapping applications that take advantage of the device's wireless link and Web capabilities to download and render maps on the device. When coupled to a location-fixing system such as a Global Positioning System (GPS) receiver, either embedded as a GPS chipset or externally (e.g. Bluetooth™ connected), these mapping applications can be used for navigation and other location-based services (LBS). The ability of the wireless device to efficiently download map data from a map server is constrained by network availability and the limited bandwidth of the wireless link. Thus, over-the-air bandwidth can play a significant role in determining the overall map-generating performance of the device.

When traveling at high speed, the device may have difficulty downloading and rendering useful detailed maps in real time. This can seriously inhibit effective navigation where map detail of key intersections or decision points along a route are unavailable or are only partially downloaded and rendered. A solution to this technical problem would thus be highly desirable.

US-A-2003/0060973 describes a technique of preloading map data and so-called predictive navigation. Here, map data may be downloaded "predictively" based on current location, heading and speed. US-A-2006/080032 discloses s system in which a vector is created indicating a direction of travel and extended or extrapolated into the adjacent map area to determine the next map data to download, assuming the device continues to travel in that direction. EP-A-1530025 defines "critical waypoints" as areas where reception is potentially poor and "virtual waypoints" where reception is better.

### GENERAL

The present technology may provide a novel method, machine readable medium, and portable electronic device that preload map data for waypoints along a route to ensure that maps of navigationally significant decision points or waypoints are available in real time.

Thus, an aspect of the present technology is a method of downloading map data to a portable electronic device, the method comprising: the steps defined in claim 1.

Another aspect of the present technology is a machine readable medium as defined in claim 7 comprising code adapted to perform the steps of the foregoing method when the machine readable medium is loaded into memory and executed on a processor of a wireless communications device.

Yet another aspect of the present technology is a portable electronic device such as for example a wireless communications device, GPS navigation unit, smartphone, etc, that is capable of preloading map data for waypoints. The portable electronic device comprises the features defined in claim 9.

The details and particulars of these aspects of the technology will now be described below, by way of example, with reference to the attached drawings.

### BRIEF DESCRIPTION OF THE DRAWINGS

Further features and advantages of the present technology will become apparent from the following detailed description, taken in combination with the appended drawings, in which:
FIG. 1 is a schematic depiction of an exemplary wireless communications device on which the present technology can be implemented, and further depicting certain main components of the device in block diagram format;
FIG. 2 is a flowchart depicting main steps of a method of preloading map data in accordance with an implementation of the present technology;
FIG. 3 is a schematic depiction of a technique for preloading a map tile for an upcoming waypoint;
FIG. 4 is a schematic depiction of a technique for preloading a plurality of map tiles for various potential waypoints;
FIG. 5 is a schematic depiction of a technique for preloading a plurality of map tiles for all waypoints along an example route from home to a golf course; and
FIG. 6 is a schematic depiction of a technique for preloading a plurality of map tiles for all waypoints along an example route from home to work.

It will be noted that throughout the appended drawings, like features are identified by like reference numerals.

### DESCRIPTION OF PREFERRED EMBODIMENTS

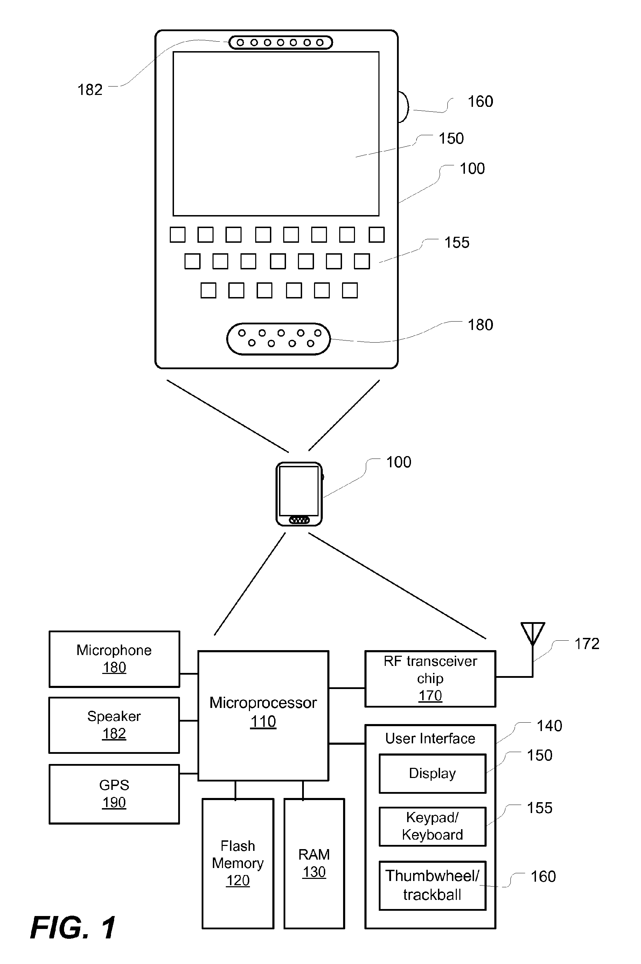

FIG. 1 is a schematic depiction of a wireless communications device 100 as an example of one type of portable electronic device on which the present technology can be implemented. This novel technology can be implemented on any type of portable electronic device that can download map data and display maps based on the map data, including smartphones, cell phones, PDAs, computing tablets, wireless-enabled laptops, etc.

As shown in FIG. 1, the portable electronic device 100 (e.g. wireless communications device) includes a microprocessor (referred to herein as a "processor") 110 operatively coupled to memory (Flash Memory 120 and RAM 130). The device 100 has a user interface 140 which includes a display (e.g. a LCD screen) 150, a keyboard/keypad 155. In the example where the portable electronic device is a wireless communications device, a thumbwheel/trackball 160 may be provided. Alternatively, the user interface may include a touch screen. The device includes a radiofrequency (RF) transceiver for sending and receiving data over the air, e.g. via cellular network, via satellite link, etc.

Where the portable electronic device is a wireless communications device, a microphone 180 and speaker 182 are provided for voice communications.

As further depicted in FIG. 1, the device 100 includes a GPS chipset 190 (or other positioning subsystem) to determine the current location of the device. The GPS chipset enables the device to be used for navigation. The navigation application typically provides turn-by-turn navigation instructions, which may optionally be audible using text-to-speech technology. Although the present disclosure refers expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of positioning subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. Radiolocation techniques may also be used in conjunction with GPS in a hybrid positioning system. References herein to "GPS" are meant to include Assisted GPS and Aided GPS.

In order to ensure that detailed (navigationally useful) maps are available in real-time for all waypoints along a route, the portable electronic device preloads the map data for areas or map tiles corresponding to each of the waypoints. For the purposes of this specification, "preloading" means that map data is downloaded in advance and cached, buffered or stored locally in the memory of the device. For the purposes of this specification, "waypoints" means intersections, decision points, forks in the route, or any other critical point along the route where a navigation decision or navigation choice may need to be made.

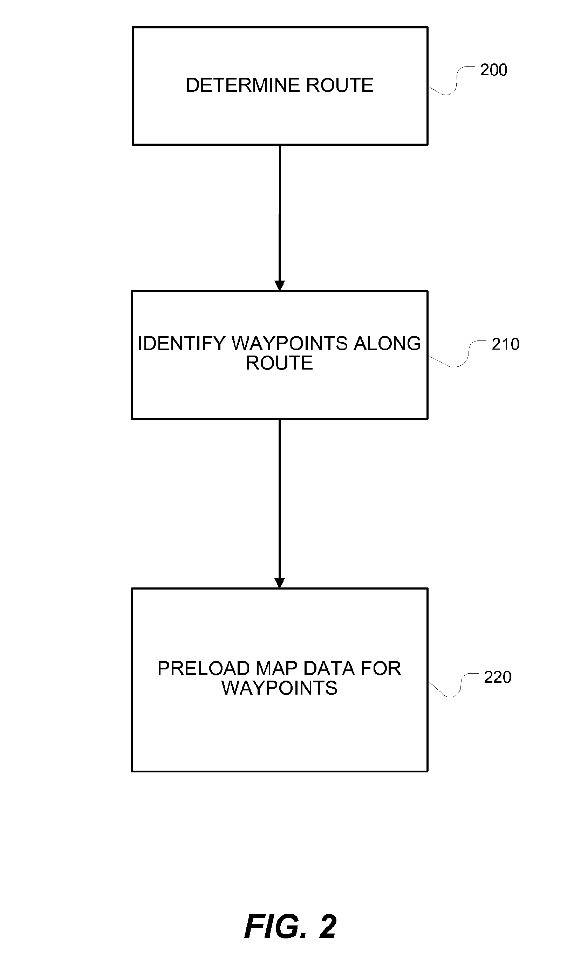

FIG. 2 is a flowchart depicting the main steps of the method of preloading map data for waypoints along a route. As shown in this figure, the method entails determining a route (at step 200), identifying waypoints along the route (step 210), and downloading and caching map data for the waypoints along the route (step 220). The route can be determined by receiving (from the user) a starting point and a destination point, thus defining a route (or at least enabling a navigation application to compute a route using any one of a number of known shortest-path or fastest-path algorithms). The route can alternatively be predicted based on a direction of travel (which in turn can be based on an average heading). The average heading can be determined by taking a number of GPS readings using a GPS chipset, for example. The route can also be determined based on historical travel patterns and by correlating the historical travel patterns with a current time and date. In other words, the device can have artificial intelligence (AI) to deduce likely routes based on the recent observed travels of the device. Thus, a route back and forth to work can be learned by the device's AI. When Monday morning comes around, the device's AI can predict that the probable route is to work.

In one implementation, a device speed is used to determine how far in advance to preload the map data. If the device is traveling slowly, it is not necessary to preload a large amount of map data for waypoints that are very far off. On the other hand, if the device is traveling quickly, e.g. on the highway, the device may need to preload waypoints that are far down the route since these will be reached soon.

In another implementation, wireless network conditions may be monitored and used to determine whether to preload map data. For example, if the wireless network is experiencing congestion, the device may initiate a download of map data sooner so that the data is available when the device approaches the waypoint. Similarly, signal strength, the availability of data service (e.g., entering an area that does not support GPRS, EDGE, or similar data services), and/or network roaming may be used to initiate a map data preload. Accordingly, one particular method may involve determining network conditions (e.g. network availability, network congestion, etc.) and preloading the map data for the waypoints along the route based on the network conditions.

The foregoing method steps can be implemented as coded instructions on a machine readable medium. In other words, the machine readable medium is a computer-readable medium upon which software code is recorded to perform the foregoing steps when the machine readable medium is loaded into memory and executed on the microprocessor of the wireless communications device.

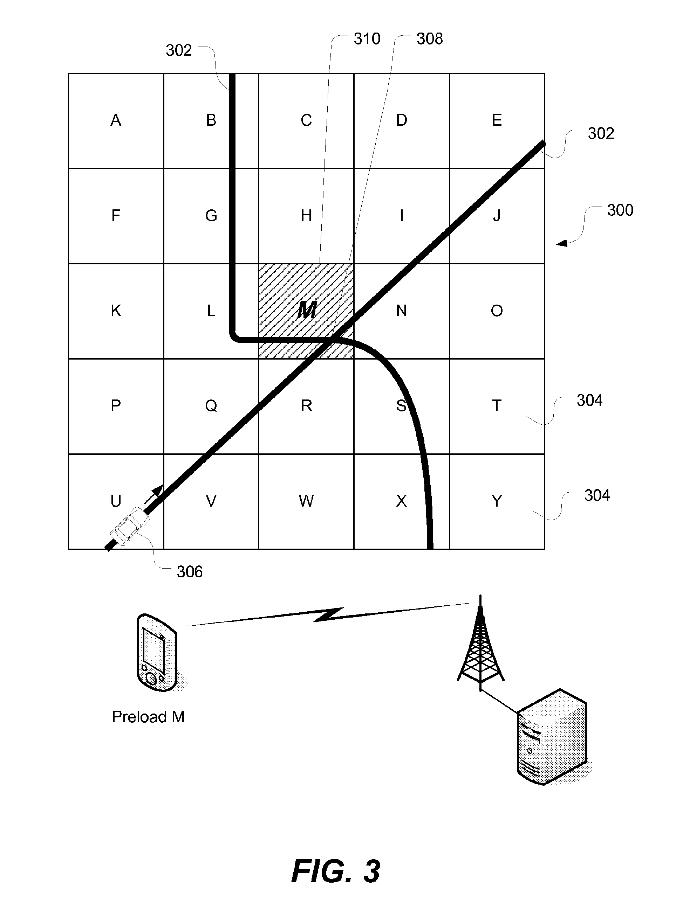

FIG. 3 schematically depicts a technique for preloading map data for a map tile corresponding to a waypoint along a route. As depicted by way of example in FIG. 3, twenty-five (25) map tiles 304 (labelled A to Y) are arranged in a 5 x 5 array or matrix 300. For the sake of illustration, two roads 302 intersect in the area circumscribed by map tile M. A car icon 306 is shown to represent the current location and the current heading of the device (which can be determined using the GPS chipset on the device). The intersection of the two roads 302 thus defines a waypoint 308. The map tile corresponding to the waypoint 308 (i.e. map tile M) is designated as a waypoint map tile 310. This waypoint map tile 310 (map tile M) is preloaded. To preload the map tile M, map data for the waypoint map tile M (designated as 310) is downloaded and cached in the memory of the device. In other words, the map data for the map tile 310 (map tile M) is downloaded in advance of the device arriving at the area circumscribed by the waypoint map tile 310. In the example depicted in FIG. 3, the device is currently located at map tile U and is heading in a north-easterly direction along the diagonal roadway 302. This is represented by car icon 306. Using conventional map loading and navigation techniques, the device would have already loaded map tile U (the current map tile) and would then load map tile V (the next map tile along the route). Other map loading techniques involve loading an entire row of tiles at a time, thus, tiles U-Y might be loaded and then map tiles P to T loaded as the device heads out of map tile V. Using this conventional approach, however, may deprive the device of a real-time map of the intersection 308 if the device cannot load row K-O fast enough as the device exits map tile R and enters map tile M. In other words, if conventional map data loading is employed, the map data for map tile M may not be loaded in time since the device may attempt to load tiles K and L first as the device traverses tile R and enters tile M. In contrast, using the novel technique disclosed in the present application, the device preloads the map data for tile M knowing that this tile contains a waypoint (i.e. an intersection where a navigation decision needs to be made).

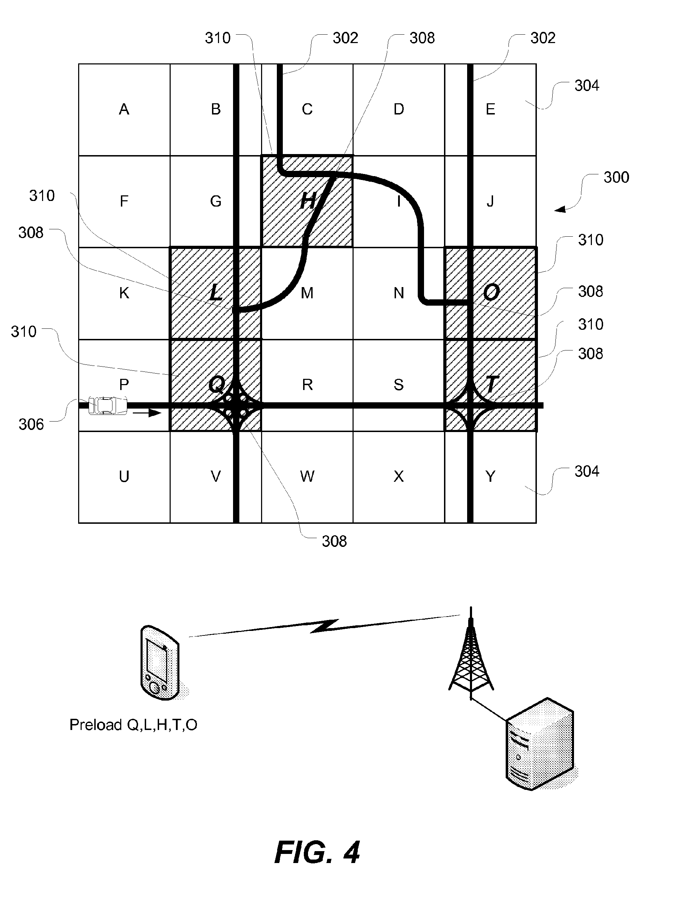

FIG. 4 schematically depicts a technique for preloading a plurality of map tiles for various potential waypoints 308. As depicted by way of example in FIG. 4, the entire array 300 contains five potential waypoints 308 (five intersections where navigation decisions need to be made). These waypoints 308 are situated within corresponding map tiles 310. In this case, these waypoint map tiles 310 are tiles Q, L, H, T and O. In this implementation, the device preloads all the map tiles having waypoints. These can furthermore be prioritized in terms of proximity such as for example tile Q, then tile L, then tile H, then tile T, then tile O. These are preloaded by downloading the map data for these map tiles and storing the map data locally on the device to ensure that if the device travels into one of these navigationally critical areas, the map data is readily available for rendering onscreen.

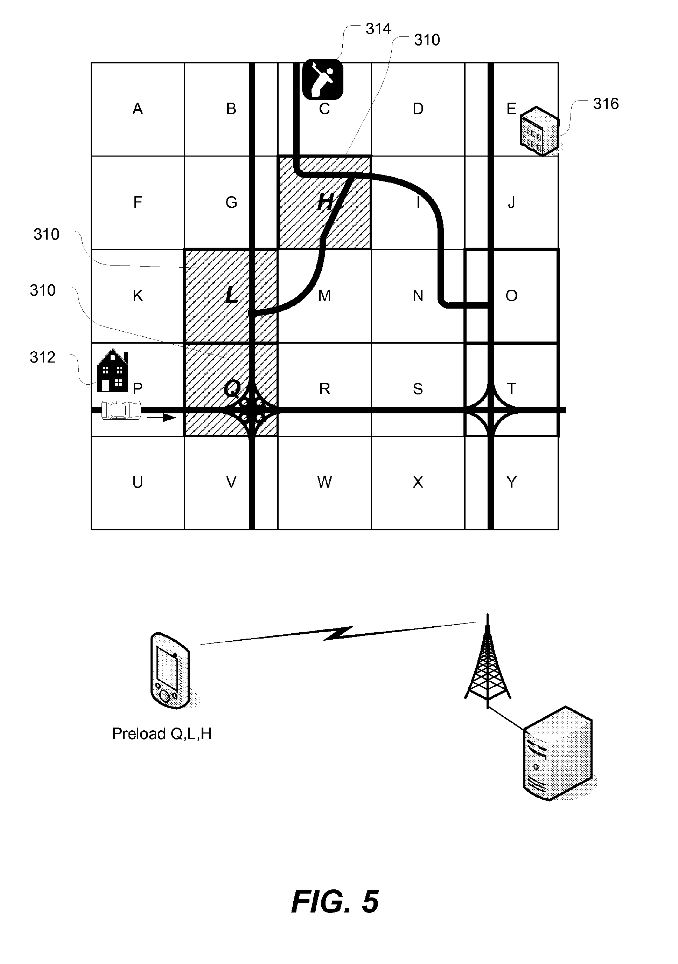

As mentioned above, in one implementation of the present technology, an artificial intelligence can observe or learn travel patterns and correlate these learned travel patterns to the current date and time in order to predict the route that the device is likely to take. The waypoints along the predicted route can then be identified and the associated map data obtained and cached. FIG. 5 is a schematic depiction of a technique for preloading a plurality of map tiles for all waypoints along an example route from home 312 to a golf course 314. For example, if the device travels every Saturday morning from home to the golf course in the summer months, then the device's AI can learn that travel pattern and apply its knowledge of that pattern to predict that on Saturday mornings the likely route will be from home 312 to the golf course 314. Accordingly, the device identifies waypoints along that route and preloads (downloads and caches) the map data for tiles Q, L and H.

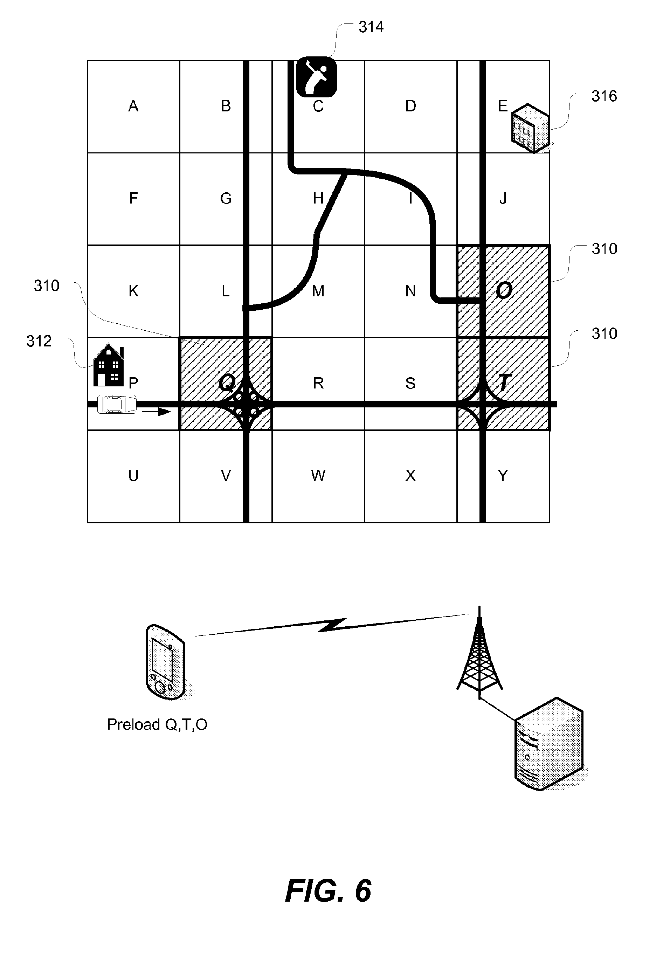

As another example, consider the case where the device's AI learns that every weekday Monday to Friday the device commutes to and from work. FIG. 6 is a schematic depiction of a technique for preloading a plurality of map tiles for all waypoints along an example route from home 312 to work 316. In this example, the device preloads tiles Q, T and O representing the tiles where waypoints (intersections) exist.

In this two examples depicted in FIG. 5 and 6, the user may well know the route without needing navigation assistance. However, the AI and learning of travel patterns can be used in many more complex and subtle manners. For example, the user of the device may travel once a year (e.g. July 4^{th} weekend or Thanksgiving) to a family reunion. This route may not be familiar for the user, in which case the preloading of map data may help to ensure that maps of key intersections or waypoints are available in real-time.

As another example, consider the case where the route is derived from a calendar entry for a meeting in a location that the user is unfamiliar with. The location of the meeting (as the destination point) and either the user's home or workplace (as the starting point) can be used to compute a route. The device then identifies the waypoints and preloads these to ensure the device has the map data cached for rendering all the critical maps along the route. The calendar entry information can be shared with the navigation application by periodically polling the calendar entry for upcoming appointments where there is location information specified.

The waypoint preloading technology disclosed herein can be used regardless whether the map data is in vector format or bitmap format.

This new technology has been described in terms of specific implementations and configurations (and variants thereof) which are intended to be exemplary only. The scope of the exclusive right sought by the applicant is therefore intended to be limited solely by the appended claims.

## Claims

1. A method of downloading map data to a portable electronic device, the method comprising:
determining (200) a route for navigation;
**characterized by** identifying (210) waypoints along the route, wherein the waypoints define decision points where navigation decisions need to be made;
identifying waypoint map tiles corresponding to each of the waypoints;
preloading and caching (220) map data for the waypoint map tiles corresponding to each of the waypoints along the route, wherein the map data for the waypoint map tiles is preloaded before preloading the next map tile which is next along the route compared to the current map tile in which the device is currently located; and
prioritizing the preloading and caching (220) of map data for the waypoint map tiles in terms of proximity of each of the waypoint map tiles to the current map tile.

2. The method as claimed in claim 1 wherein determining (200) a route comprises receiving a starting point and a destination point.

3. The method as claimed in claim 1 wherein determining (200) a route comprises predicting a direction of travel based on an average heading.

4. The method as claimed in claim 1 wherein determining (200) a route comprises predicting the route based on historical travel patterns and by correlating the historical travel patterns with a current time and date.

5. The method as claimed in any one of the preceding claims further comprising determining a device speed to determine how far in advance to preload the map data.

6. The method as claimed in any one of the preceding claims further comprising:
determining network conditions; and
preloading the map data for the waypoints based on the network conditions.

7. A machine readable storage medium comprising instructions in code which, when loaded into memory (120, 130) and executed on a processor (110) of a portable electronic device (100) cause said portable electronic device to implement the steps of the method of any one of claims 1 to 7.

8. The machine readable medium as claimed in claim 7 comprising code for determining when to preload the map data based on a device speed calculated from a reading taken by a positioning subsystem onboard the device.

9. A portable electronic device (100) comprising:
a positioning subsystem (190) for determining a current location of the device;
a radiofrequency transceiver (170) for requesting map data based on the current location of the device and for receiving the map data for map tiles corresponding to the current location of the device;
a display (150) for displaying an onscreen map based on the map data that has been received using the radiofrequency transmitter; and
a processor (110) operatively coupled to memory (120, 130) **characterized in** the processor and memory being configured to determine a route for navigation, identify at least one waypoint along the route, identify a waypoint map tile corresponding to the waypoint, and preload in the memory of the device further map data for the waypoint map tile corresponding to the at least one waypoint that is geographically beyond the map tile corresponding to the current location of the device, wherein the map data for the waypoint map tile is preloaded before preloading the next map tile which is next along the route compared to the current map tile in which the device is currently located, and wherein the processor and memory are configured to prioritize the preloading and caching (220) of map data for the waypoint map tiles in terms of proximity of each of the waypoint map tiles to the current map tile.

10. The device (100) as claimed in claim 9 wherein the processor (110) determines the route by determining a current direction of travel of the device.

11. The device (100) as claimed in claim 9 wherein the processor (110) determines the route by receiving starting and destination points.

12. The device (100) as claimed in claim 9 wherein the processor (110) determines the route based on historical travel patterns.

13. The device (100) as claimed in any one of claims 9 to 12 wherein the positioning subsystem (190) is a global positioning system 'GPS' chipset for determining the current location, current speed and current heading of the device, the GPS chipset providing current location, current speed and current heading data to the processor to enable the processor (110) to determine when to preload map tiles for successive waypoints along the route.

14. The device (100) as claimed in any one of claims 9 to 13 wherein the processor (110) cooperates with the radiofrequency transceiver (170) to determine network conditions and to preload the map data for the waypoint along the route based on the network conditions.

## Patentansprüche

1. Verfahren zum Herunterladen von Kartendaten auf ein tragbares elektronisches Gerät, das Verfahren umfassend:
Bestimmen (200) einer Navigationsroute;
**gekennzeichnet durch** das Identifizieren (210) von Wegpunkten entlang der Route, wobei die Wegpunkte Entscheidungspunkte definieren, an denen Navigationsentscheidungen getroffen werden müssen;
Identifizieren von Wegpunktkartenkacheln entsprechend jedem der Wegpunkte;
Vorladen und Cachen (220) von Kartendaten für die Wegpunktkartenkacheln entsprechend jedem der Wegpunkte entlang der Route, wobei die Kartendaten für die Wegpunktkartenkacheln vorgeladen werden, bevor die nächste Kartenkachel vorgeladen wird, die verglichen zur aktuellen Kartenkachel, in der sich das Gerät aktuell befindet, als nächstes entlang der Route liegt; und
Priorisieren des Vorladens und Cachens (220) von Kartendaten für die Wegpunktkartenkacheln bezüglich einer Nähe jeder der Wegpunktkartenkacheln zur aktuellen Kartenkachel.

2. Verfahren gemäß Anspruch 1, wobei das Bestimmen (200) einer Route das Empfangen eines Ausgangspunktes und eines Zielpunktes umfasst.

3. Verfahren gemäß Anspruch 1, wobei das Bestimmen (200) einer Route das Vorhersagen einer Reiserichtung basierend auf einem Durchschnittskurs umfasst.

4. Verfahren gemäß Anspruch 1, wobei das Bestimmen (200) einer Route das Vorhersagen der Route basierend auf vergangenen Reisemustern und durch das in-Beziehung-setzen der vergangenen Reisemuster zu einer aktuellen Zeit und Datum umfasst.

5. Verfahren nach einem der vorstehenden Ansprüche, ferner umfassend das Bestimmen einer Gerätegeschwindigkeit, um zu bestimmen, wie weit im Voraus die Kartendaten vorzuladen sind.

6. Verfahren nach einem der vorstehenden Ansprüche, ferner umfassend:
Bestimmen von Netzwerkbedingungen; und
Vorladen der Kartendaten für die Wegpunkte basierend auf den Netzwerkbedingungen.

7. Maschinenlesbares Speichermedium umfassend Befehle in Code, die, wenn sie in den Speicher (120, 130) geladen und auf einem Prozessor (110) eines tragbaren elektronischen Geräts (100) ausgeführt werden, dieses tragbare elektronische Gerät dazu veranlassen, die Schritte des Verfahrens gemäß einem der Ansprüche 1 bis 7 durchzuführen.

8. Das maschinenlesbare Medium gemäß Anspruch 7, umfassend Code, um zu bestimmen, wann die Kartendaten basierend auf einer Gerätegeschwindigkeit, die aus einer von einem Positionsbestimmungs-Untersystem auf dem Gerät getätigten Messung errechnet wird, vorzuladen sind.

9. Tragbares elektronisches Gerät (100) aufweisend:
ein Positionsbestimmungs-Untersystem (190) zur Bestimmung einer aktuellen Position des Geräts;
eine Funkfrequenz-Sende/Empfangsvorrichtung (170) zum Anfordern von Kartendaten basierend auf der aktuellen Position des Geräts und zum Empfangen der Kartendaten für Kartenkacheln entsprechend der aktuellen Position des Geräts;
eine Anzeige (150) zum Anzeigen einer Bildschirmkarte basierend auf den Kartendaten, die durch Verwendung des Funkfrequenztransmitters empfangen wurden; und
ein Prozessor (110), der betriebsfähig an den Speicher (120, 130) gekoppelt ist, **dadurch gekennzeichnet, dass** der Prozessor und der Speicher derart konfiguriert sind, eine Navigationsroute zu bestimmen, wenigstens einen Wegpunkt entlang der Route zu identifizieren, eine Wegpunktkartenkachel entsprechend des Wegpunkts zu identifizieren, und weitere Kartendaten für die Wegpunktkartenkachel entsprechend dem wenigstens einen Wegpunkt, der geografisch nach der Kartenkachel entsprechend der aktuellen Position des Geräts liegt, in den Speicher des Geräts vorzuladen, wobei die Kartendaten für die Wegpunktkartenkachel vor dem Vorladen der nächsten Kartenkachel, die im Vergleich zur aktuellen Kartenkachel, in der sich das Gerät aktuell befindet, als nächstes entlang der Route liegt, vorgeladen werden, und wobei der Prozessor und der Speicher konfiguriert sind, das Vorladen und Cachen (220) von Kartendaten für die Wegpunktkartenkacheln bezüglich der Nähe jeder der Wegpunktkartenkacheln zur aktuellen Kartenkachel zu priorisieren.

10. Gerät (100) gemäß Anspruch 9, wobei der Prozessor (110) die Route durch Bestimmen einer aktuellen Reiserichtung des Geräts bestimmt.

11. Gerät (100) gemäß Anspruch 9, wobei der Prozessor (110) die Route durch Empfangen von Ausgangs- und Zielpunkten bestimmt.

12. Gerät (100) gemäß Anspruch 9, wobei der Prozessor (110) die Route basierend auf vergangenen Reisemustern bestimmt.

13. Gerät (100) gemäß einem der Ansprüche 9 bis 12, wobei das Positionsbestimmungs-Untersystem (190) ein globaler Positionsbestimmungssystem "GPS" Chipsatz ist zum Bestimmen der aktuellen Position, der aktuellen Geschwindigkeit und des aktuellen Kurses des Geräts, und der GPS Chipsatz dem Prozessor aktuelle Positions-, aktuelle Geschwindigkeits-, und aktuelle Kursdaten bereitstellt, um es dem Prozessor (110) zu ermöglichen, zu bestimmen, wann Kartenkacheln für nachfolgende Wegpunkte entlang der Route vorzuladen sind.

14. Gerät (100) gemäß einem der Ansprüche 9 bis 13, wobei der Prozessor (110) mit der Funkfrequenz-Sende/Empfangsvorrichtung (170) zusammenwirkt, um Netzwerkbedingungen zu bestimmen und die Kartendaten für den Wegpunkt entlang der Route basierend auf den Netzwerkbedingungen vorzuladen.

## Revendications

1. Procédé de téléchargement de données cartographiques sur un dispositif électronique portable, le procédé comprenant le fait :
de déterminer (200) un itinéraire pour la navigation ;
**caractérisé par** l'identification (210) de points de cheminement le long de l'itinéraire, où les points de cheminement définissent des points de décision où des décisions de navigation doivent être faites ;
d'identifier des pavés cartographiques de point de cheminement correspondant à chacun des points de cheminement ;
de précharger et mettre en antémémoire (220) des données cartographiques pour les pavés cartographiques de point de cheminement correspondant à chacun des points de cheminement le long de l'itinéraire, où les données cartographiques pour les pavés cartographiques de point de cheminement sont préchargées avant le préchargement du pavé cartographique suivant qui est le suivant le long de l'itinéraire en comparaison avec le pavé cartographique actuel dans lequel le dispositif est situé actuellement ; et
de prioriser le préchargement et la mise en antémémoire (220) de données cartographiques pour les pavés cartographiques de point de cheminement en termes de proximité de chacun des pavés cartographiques de point de cheminement du pavé cartographique actuel.

2. Procédé tel que revendiqué dans la revendication 1, dans lequel la détermination (200) d'un itinéraire comprend le fait de recevoir un point de départ et un point de destination.

3. Procédé tel que revendiqué dans la revendication 1, dans lequel la détermination (200) d'un itinéraire comprend le fait de prédire une direction de déplacement sur la base d'un cap moyen.

4. Procédé tel que revendiqué dans la revendication 1, dans lequel la détermination (200) d'un itinéraire comprend le fait de prédire l'itinéraire sur la base de modèles de déplacement historiques et en corrélant les modèles de déplacement historiques avec une heure et une date actuelles.

5. Procédé tel que revendiqué dans l'une quelconque des revendications précédentes, comprenant en outre la détermination d'une vitesse de dispositif pour déterminer combien de temps à l'avance faut-il pour précharger les données cartographiques.

6. Procédé tel que revendiqué dans l'une quelconque des revendications précédentes comprenant en outre le fait :
de déterminer des conditions de réseau ; et
de précharger les données cartographiques pour les points de cheminement sur la base des conditions de réseau.

7. Support de stockage lisible par machine comprenant des instructions en code qui, lorsqu'elles sont chargées dans une mémoire (120, 130) et exécutées sur un processeur (110) d'un dispositif électronique portable (100), amènent ledit dispositif électronique portable à mettre en oeuvre les étapes du procédé de l'une quelconque des revendications 1 à 7.

8. Support lisible par machine tel que revendiqué dans la revendication 7, comprenant un code pour déterminer quand précharger les données cartographiques sur la base d'une vitesse de dispositif calculée à partir d'une lecture prise par un sous-système de positionnement embarqué sur le dispositif.

9. Dispositif électronique portable (100) comprenant :
un sous-système de positionnement (190) pour déterminer un emplacement actuel du dispositif ;
un émetteur-récepteur radiofréquence (170) pour demander des données cartographiques sur la base de l'emplacement actuel du dispositif et pour recevoir les données cartographiques pour des pavés cartographiques correspondant à l'emplacement actuel du dispositif ;
un afficheur (150) pour afficher une carte sur écran sur la base des données cartographiques qui ont été reçues en utilisant l'émetteur radiofréquence ; et
un processeur (110) couplé de manière fonctionnelle à une mémoire (120, 130), **caractérisé en ce que** le processeur et la mémoire étant configurés pour déterminer un itinéraire pour la navigation, pour identifier au moins un point de cheminement le long de l'itinéraire, pour identifier un pavé cartographique de point de cheminement correspondant au point de cheminement, et pour précharger dans la mémoire du dispositif des données cartographiques supplémentaires pour le pavé cartographique de point de cheminement correspondant à l'au moins un point de cheminement qui est géographiquement au-delà du pavé cartographique correspondant à l'emplacement actuel du dispositif, où les données cartographiques pour le pavé cartographique de point de cheminement sont préchargées avant le préchargement du pavé cartographiques suivant qui est le suivant le long de l'itinéraire en comparaison avec le pavé cartographique actuel dans lequel le dispositif est situé actuellement, et où le processeur et la mémoire sont configurés pour prioriser le préchargement et la mise en antémémoire (220) de données cartographiques pour les pavés cartographiques de point de cheminement en termes de proximité de chacun des pavés cartographiques de point de cheminement du pavé cartographique actuel.

10. Dispositif (100) tel que revendiqué dans la revendication 9, dans lequel le processeur (110) détermine l'itinéraire en déterminant une direction de déplacement actuelle du dispositif.

11. Dispositif (100) tel que revendiqué dans la revendication 9, dans lequel le processeur (110) détermine l'itinéraire en recevant des points de départ et de destination.

12. Dispositif (100) tel que revendiqué dans la revendication 9, dans lequel le processeur (110) détermine l'itinéraire sur la base de modèles de déplacement historiques.

13. Dispositif (100) tel que revendiqué dans l'une quelconque des revendications 9 à 12, dans lequel le sous-système de positionnement (190) est un jeu de puces de système de positionnement mondial 'GPS' pour déterminer l'emplacement actuel, la vitesse actuelle et le cap actuel du dispositif, le jeu de puces GPS fournissant des données d'emplacement actuel, de vitesse actuelle et de cap actuel au processeur pour permettre au processeur (110) de déterminer quand pécharger des pavés cartographiques pour des points de cheminement successifs le long de l'itinéraire.

14. Dispositif (100) tel que revendiqué dans l'une quelconque des revendications 9 à 13, dans lequel le processeur (110) coopère avec l'émetteur-récepteur radiofréquence (170) pour déterminer des conditions de réseau et pour précharger les données cartographiques pour le point de cheminement le long de l'itinéraire sur la base des conditions de réseau.
